# EUROPÄISCHE PATENTSCHRIFT

(11) **EP 3 468 849 B1**
(45) Veröffentlichungstag und Bekanntmachung des Hinweises auf die Patenterteilung: **09.02.2022**
(21) Anmeldenummer: 17715045.5
(22) Anmeldetag: 31.03.2017
(51) Int. Cl.: B60T 17/22

(54) **VERFAHREN ZUM ÜBERWACHEN EINER ABS-REGELUNG IN EINEM ELEKTRISCH STEUERBAREN BREMSSYSTEM SOWIE ELEKTRONISCH STEUERBARES BREMSSYSTEM**
METHOD FOR MONITORING AN ABS CONTROL PROCESS IN AN ELECTRICALLY CONTROLLABLE BRAKE SYSTEM AND ELECTRONICALLY CONTROLLABLE BRAKE SYSTEM
PROCÉDÉ DE SURVEILLANCE D'UNE RÉGULATION ABS DANS UN SYSTÈME DE FREINAGE À COMMANDE ÉLECTRIQUE ET SYSTÈME DE FREINAGE À COMMANDE ÉLECTRONIQUE

(30) Priorität: 10.06.2016 DE 102016007149
(43) Veröffentlichungstag der Anmeldung: 17.04.2019
(73) Patentinhaber: ZF CV Systems Europe BV, 1170 Brussels (BE)
(72) Erfinder: BINDER, Hartmut, 30657 Hannover (DE); MARX, Andreas, 30926 Seelze (DE)
(74) Vertreter: Rabe, Dirk-Heinrich
(86) Internationale Anmeldenummer: PCT/EP2017/000396
(87) Internationale Veröffentlichungsnummer: WO 2017/211436

(56) Entgegenhaltungen:
- EP-A2- 1 150 209
- CN-A- 104 635 715
- GB-A- 2 127 507
- US-A- 5 897 596
- US-A- 6 009 366
- US-A1- 2015 094 906

## Beschreibung

Die Erfindung betrifft ein Verfahren zum Überwachen einer ABS-Regelung in einem elektrisch steuerbaren Bremssystem eines Fahrzeuges, insbesondere Nutzfahrzeuges, sowie elektronisch steuerbares Bremssystem.

In Fahrzeugen, insbesondere Nutzfahrzeugen, mit einem elektronisch steuerbaren Bremssystem ist allgemein bekannt, eine ABS-Regelung einzusetzen, mit der ein bremsschlupfgeregeltes Abbremsen erreicht werden kann. Dabei werden bei Erkennen eines ABS-Bremsschlupffalls anhand von Raddrehzahlsignalen eines entsprechenden Sensors von einer ABS-Steuereinrichtung ABS-Steuerventile an den Rädern angesteuert, an denen der ABS-Bremsschlupffall erkannt wurde. Dadurch wird ein wirkender Bremsdruck an Radbremsen dieses Rades entsprechend reduziert oder gehalten, um einer Blockierneigung der jeweiligen Räder entgegenzuwirken. Eine Überwachung der Zuverlässigkeit der ABS-Regelung ist nicht vorgesehen.

Zum Prüfen der Zuverlässigkeit eines Ausgabesignals eines Steuergerätes in einem Fahrzeug ist nach EP 2 693 278 A2 bekannt, ein durch einen Algorithmus bestimmtes sicherheitskritisches Ausgabesignal beispielsweise eines Notbremssystems zu überprüfen bzw. zu plausibilisieren. Demnach wird bei Erkennen eines sicherheitskritischen Ausgabesignals dieses ein weiteres Mal ermittelt, indem auf eine redundante Hardware oder einen redundanten Algorithmus zurückgegriffen wird. Gemäß EP 2 726 352 B1 ist weiterhin vorgesehen, eine Funktion einer Sicherheitsüberwachung zu prüfen. Dabei werden die ausgegebenen Signale der Sicherheitsüberwachung in einer externen Überwachungsinstanz bzw. Überwachungseinrichtung mit Soll-Werten hinsichtlich Inhalt und/oder Zeitabständen verglichen. Bei einer Abweichung werden geeignete Sicherheitsmaßnahmen eingeleitet.

Aus der Patentschrift US 6,009,366 ist ein Verfahren zur Überwachung eines Bremssystems mit ABS und elektronischer Bremskraftverteilung (EBV) bekannt. Das bekannte Bremssystem enthält je einen Bremskreis für die Vorder- und die Hinterachse. Um einen Fehler im Vorderachs-Bremskreis zu identifizieren, werden Kriterien überwacht, welche vom Beschleunigungsverhalten der Fahrzeugräder abhängen. Zusammen damit werden außerdem Schlupf-Toleranzbänder überwacht. Im Falle eines entdeckten Vorderachs Bremskreis-Ausfallswird in die elektronische Steuerung der EBV eingegriffen.

GB 2 127 507 A offenbart einen Fahrzeug-Bremsschlupfregler, der parallele Logikschaltungen zur Erkennung von Fehlern im Bremsregelsystem aufweist. Der Regler verwendet Sensoren, die die Drehung der Fahrzeugräder oder der Radachsen überwachen. Mit den Sensorsignalen werden Ventile angesteuert, mit denen der den Rädern zugeführte Bremsdruck in Abhängigkeit von deren Drehverhältnissen eingestellt werden kann. Die Sensorsignale werden parallel zu zwei oder mehr unabhängig voneinander synchron arbeitenden Logikschaltungen zugeführt, die die Steuersignale für die Bremsventile liefern und sowohl einen externen als auch internen Vergleich der empfangenen Signale und der Signalkurven ermöglichen. Dies ermöglicht eine ausfallsichere Kontrolle, die eine teilweise oder vollständige Aufhebung der Bremsregelung erlaubt. Die Logikschaltungen bestehen aus Mikroprozessoren.

Es ist Aufgabe der Erfindung, ein Verfahren zum Überwachen einer ABS-Regelung in einem elektrisch steuerbaren Bremssystem bereitzustellen, mit dem mit wenig Aufwand eine sichere und zuverlässige Bremsung gewährleistet werden kann. Weiterhin ist Aufgabe der Erfindung, ein elektronisch steuerbares Bremssystem bereitzustellen.

Diese Aufgabe wird durch ein Verfahren nach Anspruch 1 sowie ein elektrisch steuerbares Bremssystem nach Anspruch 6 gelöst. Bevorzugte Weiterbildungen sind in den Unteransprüchen angegeben.

Erfindungsgemäß ist demnach eine Überprüfung bzw. Plausibilisierung einer Anforderung einer ABS-Regelung vorgesehen, wobei der Anspruch 1 bezieht sich auf ein Verfahren zum Überwachen einer ABS-Regelung in einem elektrisch steuerbaren Bremssystem in einem Fahrzeug, insbesondere Nutzfahrzeug, mit mindestens den folgenden Schritten: Einlesen von Eingangs-Signalen, wobei aus den Eingangs-Signalen aktuell vorliegende Regelgrößen für die ABS-Regelung sowie ABS-Steuerparameter, die eine bremsschlupfgeregelte Ansteuerung eines ABS-Steuerventils des Bremssystems betreffen, abgeleitet werden können; Überprüfen, ob aus den Eingangs-Signalen folgt, dass eine Aktivierung eines beliebigen einem Rad des Fahrzeuges zugeordneten ABS-Steuerventils angefordert wird, und - ob aus den Regelgrößen folgt, dass ein ABS-Bremsschlupffall an mindestens einem Rad des Fahrzeuges vorliegt, und/oder - ob aus den ABS-Steuerparametern folgt, dass weitere ABS-Steuerventile, die mindestens einem weiteren Rad des Fahrzeuges zugeordnet sind, eine bremsschlupfgeregelte Ansteuerung fehlerfrei umsetzen; und Ausgeben eines Deaktivierungs-Signals in Abhängigkeit der Überprüfung zum situationsabhängigen Verhindern einer Ansteuerung der ABS-Steuerventile, wobei eine Ansteuerung der ABS-Steuerventile verhindert wird, wenn eine Aktivierung eines beliebigen ABS-Steuerventils angefordert wird und kein ABS-Bremsschlupffall an mindestens einem der Räder des Fahrzeuges erkannt wurde, wobei bei der Überprüfung eine Toleranzzeit berücksichtigt wird, wobei eine Ansteuerung der ABS-Steuerventils erst dann verhindert wird, wenn - nach dem Ansteuern eines beliebigen ABS-Steuerventils und nach dem Ablauf der Toleranzzeit kein ABS-Bremsschlupffall an mindestens einem Rad erkannt wurde und/oder - nach dem Erkennen einer fehlerhaften Umsetzung eines weiteren ABS-Steuerventils und nach dem Ablauf der Toleranzzeit die Ansteuerung eines beliebigen ABS-Steuerventils beibehalten wird.

Somit wird bereits der Vorteil erreicht, dass überwacht werden kann, ob lediglich dann eine ABS-Regelung erfolgt, wenn diese auch tatsächlich nötig ist und sich aus der ABS-Regelung keine instabilen Fahrzustände ergeben bzw. das Bremssystem durch falsch angesteuerte ABS-Steuerventile nicht wirkungsvermindert wird. Denn eine unnötige Aktivierung eines ABS-Steuerventils ohne das Vorliegen eines ABS-Bremsschlupffalles an irgendeinem der Räder des Fahrzeuges kann zu einer wirkungsverminderten Bremsung und somit zu einer Verkehrsgefährdung oder zu einer Verunsicherung des Fahrers oder aber auch zu einem instabilen Fahrzustand führen, falls beispielsweise die unnötige Aktivierung lediglich einseitig stattfindet. Auch für den Fall, dass eine ABS-Regelung an einzelnen ABS-Steuerventilen nicht fehlerfrei umgesetzt wird oder werden kann, können instabile Fahrzustände auftreten.

In Abhängigkeit der Überprüfung wird erfindungsgemäß ein Deaktivierungs-Signal zum situationsabhängigen Deaktivieren einer Ansteuerung aller ABS-Steuerventile ausgegeben, so dass eine unzuverlässige und unsichere Ansteuerung der ABS-Steuerventile verhindert werden kann.

Diese Verhinderung der Ansteuerung der ABS-Steuerventile erfolgt vorteilhafterweise dann, wenn bei einer Anforderung zur Aktivierung eines beliebigen ABS-Steuerventils tatsächlich kein ABS-Bremsschlupffall an mindestens einem Rad des Fahrzeugs vorliegt bzw. erkannt wurde. Somit kann in einfacher Weise bereits ohne eine radbezogene Auswertung erkannt werden, ob eine Aktivierung eines ABS-Steuerventils vorliegt, obwohl an keinem der Räder des Fahrzeuges ein ABS-Bremsschlupffall auftritt und diese Aktivierung somit nicht gerechtfertigt ist.

Gemäß einer speziellen Ausführungsform ist vorgesehen, dass lediglich ermittelt wird, ob an dem jeweiligen ABS-Steuerventil zugeordneten Rad auch tatsächlich ein ABS-Bremsschlupffall vorliegt. Diese radbezogene Auswertung ist bei ausschließlich individual geregelten Rädern/Ventilen anwendbar, welche nicht z. B. durch Verknüpfung mit anderen Rädern angesteuert werden wie z. B. bei einer modifizierten Individualregelung.

Weiterhin wird eine Verhinderung der Ansteuerung der ABS-Steuerventile stattfinden, wenn festgestellt wurde, dass eines der weiteren ABS-Steuerventile eine bremsschlupfgeregelte Ansteuerung nicht fehlerfrei umsetzt oder umsetzen kann.

Unter Verhindern bzw. Deaktivieren einer Ansteuerung aller ABS-Steuerventile wird hierbei verstanden, dass entweder ein Übermitteln von Steuersignalen an die ABS-Steuerventile unterbunden wird oder aber die ABS-Steuerventile selbst deaktiviert werden und somit ihren Zustand nicht mehr ändern können. Eine bremsschlupfgeregelte Beeinflussung eines Bremsdruckes ist somit zumindest über die ABS-Steuerventile nicht mehr möglich.

Somit wird erfindungsgemäß auf ein Erkennen einer fehlerhaften ABS-Regelung mit einem Unterbinden der Ansteuerung aller ABS-Steuerventile reagiert. Dadurch wird sichergestellt, dass ein Ansteuern von ABS-Steuerventilen nicht zu einer Instabilität des Fahrzeuges zur Verunsicherung des Fahrers oder zu einer verminderten Wirkung des Bremssystems führt.

Vorzugsweise findet die Überprüfung, ob bei einer Aktivierung eines ABS-Steuerventils eine fehlerfreie Umsetzung an einem weiteren ABS-Steuerventil vorliegt, achsbezogen statt. D.h. bei Aktivierung eines ABS-Steuerventils, vorzugsweise eines ABS-Steuerventils an einer Vorderachse des Fahrzeuges, wird geprüft, ob weitere ABS-Steuerventile an einer anderen Fahrzeugachse, vorzugsweise an einer Hinterachse des Fahrzeuges, fehlerfrei funktionieren. Falls eines der weiteren ABS-Steuerventile an der Hinterachse, das bremsschlupfgeregelt angesteuert wird, nicht fehlerfrei funktioniert, kann es zu einem Ausbrechen des Fahrzeuges kommen, falls gleichzeitig eine bremsschlupfgeregelte Ansteuerung an dem ABS-Steuerventil der Vorderachse vorliegt. Somit wird in diesem Fall ein entsprechendes Deaktivierungs-Signal ausgegeben, so dass eine Aktivierung aller ABS-Steuerventile des Fahrzeuges verhindert wird.

Als Regelgrößen werden bei der Überprüfung eine Radgeschwindigkeit bzw. ein Radschlupf oder eine Radumfangsbeschleunigung verstanden, in Abhängigkeit derer ein ABS-Bremsschlupffall erkannt werden kann. Diese Regelgrößen folgen beispielsweise aus Raddrehzahlsignalen eines Raddrehzahlsensors an dem jeweiligen Rad. Die ABS-Steuerparameter geben insbesondere an, ob von der ABS-Regelung bzw. einer diese ABS-Regelung steuernde ABS-Steuereinrichtung eine bremsschlupfgeregelte Anforderung über ein Steuersignal an ein ABS-Steuerventil ausgegeben wurde und ob das entsprechende ABS-Steuerventil die Anforderungen fehlerfrei und vollständig umsetzt.

Als ABS-Bremsschlupffall wird verstanden, dass aus den Regelgrößen für ein dem jeweiligen ABS-Steuerventil zugeordneten Rad folgt, dass dieses dazu neigt, zu blockieren. Dazu kann beispielsweise die Radgeschwindigkeit mit einer Referenzgeschwindigkeit des Fahrzeuges verglichen werden und bei Abweichen um eine bestimmte Differenz-Geschwindigkeit auf einen zu hohen Bremsschlupf und somit auf einen ABS-Bremsschlupffall geschlossen werden. Weiterhin kann auch bei einer zu hohen Radumfangsbeschleunigung auf einen zu hohen Bremsschlupf und somit einen ABS-Bremsschlupffall geschlossen werden.

Vorzugsweise kann bei der Überprüfung zusätzlich eine Nachlaufzeitspanne berücksichtigt werden, die beispielsweise 2000ms betragen kann. Die Nachlaufzeitspanne wird nach dem Wegfall eines zuvor erkannten ABS-Bremsschlupffalles an einem beliebigen Rad des Fahrzeuges angesetzt. Tritt also beispielsweise aufgrund der ABS-Regelung ein zuvor erkannter ABS-Bremsschlupffall zu einem Zeitpunkt nicht mehr auf, wird im Folgenden erst nach der Nachlaufzeitspanne ein Deaktivierungs-Signal ausgegeben, falls dann noch immer eine Ansteuerung eines beliebigen ABS-Steuerventils vorliegt. Dies hat den Vorteil, dass Verzögerungen bei der Signalaufnahme und/oder Signalverarbeitung oder aber auch abschließende Ventilansteuerungen nach einer korrekten ABS-Regelung nicht fälschlicherweise zu einer Deaktivierung der Ansteuerung der ABS-Steuerventile führen.

Erfindungsgemäß wird bei der Überwachung weiterhin eine Toleranzzeit berücksichtigt, die beispielsweise 50ms betragen kann. Die Toleranzzeit wird nach dem Erkennen einer Ansteuerung eines ABS-Steuerventils oder nach dem Erkennen einer fehlerhaften Ansteuerung eines weiteren ABS-Steuerventils angesetzt. Wird demnach innerhalb der Toleranzzeit bei aktiviertem ABS-Steuerventil kein ABS-Bremsschlupffall für ein beliebiges Rad des Fahrzeuges erkannt bzw. erfolgt innerhalb der Toleranzzeit nach dem Erkennen einer fehlerhaften Ansteuerung eines weiteren ABS-Steuerventils eine Aktivierung des ABS-Steuerventils, wird über das Deaktivierungs-Signal eine Anforderung der ABS-Steuerventile verhindert.

Auch dadurch können vorteilhafterweise Verzögerungen bei der Signalverarbeitung und -übertragung berücksichtigt werden.

Die Nachlaufzeitspanne und/oder die Toleranzzeit können aber auch wegfallen bzw. auf 0ms gesetzt werden, wenn beispielsweise eine sichere und zuverlässige Übertragung mit wenigen Zeitverlusten gewährleistet werden kann. Demnach wird bei einer Ansteuerung eines ABS-Steuerventils immer gleichzeitig überprüft, ob ein ABS-Bremsschlupffall auftritt und/oder ein weiteres ABS-Steuerventil die bremsschlupfgeregelte Ansteuerung fehlerfrei umsetzt.

Erfindungsgemäß wird das Verfahren in einer Überwachungseinrichtung eines elektronisch gesteuerten pneumatischen oder hydraulischen Brems Systems mit einer ABS-Steuereinrichtung durchgeführt, mit einem elektronischen steuerbaren Bremssystem, geeignet zur Durchführung des Verfahrens nach Anspruch 1, mindestens aufweisend: ABS-Steuerventile zum bremsschlupfgeregelten Abbremsen der Räder einer Fahrzeugachse, eine ABS-Steuereinrichtung zur Steuerung der ABS-Regelung, eine Überwachungseinrichtung zum Durchführen der Überprüfung, wobei die Überwachungseinrichtung ausgebildet ist, Eingangs-Signale einzulesen, wobei aus den Eingangs-Signalen aktuell vorliegende Regelgrößen für die ABS-Regelung sowie ABS-Steuerparameter, die eine bremsschlupfgeregelte Ansteuerung eines ABS-Steuerventils des Bremssystems betreffen, herleitbar sind, und ein Deaktivierungs-Signal in Abhängigkeit der Überprüfung zu erzeugen und auszugeben.

Somit werden von der Überwachungseinrichtung Eingangs-Signale eingelesen, die intern über Signale weiterverarbeitet werden, indem für diese internen Signale zeitliche Signalverläufe erstellt werden. Anhand dieser zeitlichen Verläufe findet das erfindungsgemäße Verfahren zum Überprüfen bzw. Plausibilisieren statt, ob die Anforderungen im Hinblick auf die Sicherheit und Zuverlässigkeit gerechtfertigt sind. Wird von der Überwachungseinrichtung auf eine unsichere oder unzuverlässige ABS-Regelung geschlossen, wird das Deaktivierungs-Signal vorzugsweise an die ABS-Steuereinrichtung ausgegeben, die dann eine weitere Ansteuerung aller ABS-Steuerventile des Fahrzeuges verhindert.

Die Erfindung wird im Folgenden anhand der beiliegenden Zeichnung erläutert. Es zeigen:
- Fig. 1a, b: erfindungsgemäße Bremssysteme als Blockschaltbild;
- Fig. 2a - c: zeitliche Signalverläufe gemäß einer ersten Ausführungsform;
- Fig. 3a - e: zeitliche Signalverläufe gemäß einer weiteren Ausführungsform; und

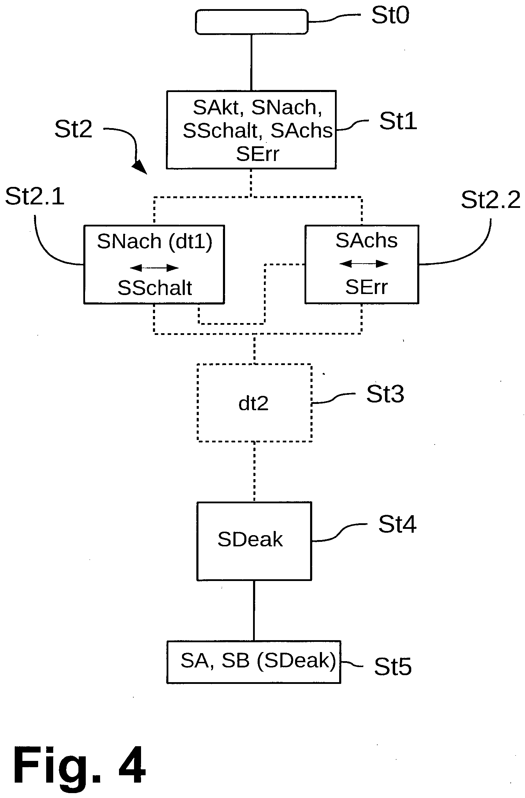

- Fig. 4: ein Flussdiagramm zur Durchführung des Verfahrens

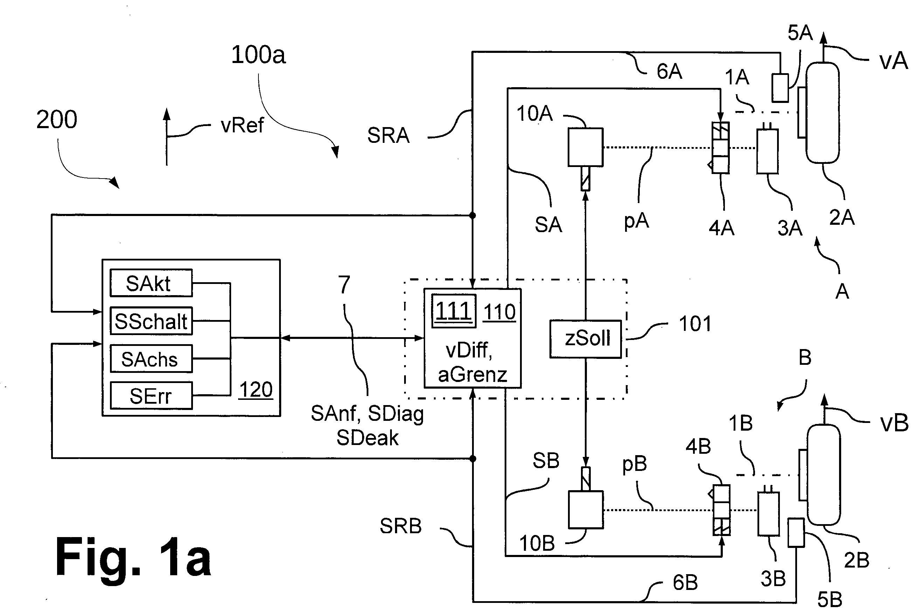

Gemäß Fig. 1a ist ein Ausschnitt aus einem pneumatischen Bremssystem 100a eines Fahrzeuges 200 als Blockschaltbild mit den hier wesentlichen Komponenten dargestellt, das elektronisch über eine Steuereinrichtung 101 gesteuert wird, um eine angeforderte Fahrzeug-Soll-Verzögerung zSoll umzusetzen.

Das Fahrzeug 200 weist zwei Fahrzeugachsen 1A, 1B auf, an denen jeweils Räder 2A, 2B angeordnet sind, wobei der Übersichtlichkeit halber lediglich ein Rad 2A, 2B pro Fahrzeugachse 1A, 1B dargestellt ist. Die nicht gezeigten Räder des Fahrzeuges 200 sind entsprechend ausgeführt. Die Räder 2A, 2B können in zwei unabhängigen Bremskreisen A, B über Radbremsen 3A, 3B abgebremst werden, wobei der jeweiligen Radbremse 3A, 3B über ein Relaisventil 10A, 10B, das von der Steuereinrichtung 101 gesteuert wird, ein Bremsdruck pA, pB zum Bewirken der Fahrzeug-Soll-Verzögerung zSoll bereitgestellt wird.

Um auf einen ABS-Bremsschlupffall reagieren zu können, ist jedem Rad 2A, 2B ein ABS-Steuerventil 4A, 4B zugeordnet, das von einer in der Steuereinrichtung 101 integrierten ABS-Steuereinrichtung 110 über Steuersignale SA, SB angesteuert bzw. aktiviert wird, falls von der ABS-Steuereinrichtung 110 ein ABS-Bremsschlupffall erkannt wurde. Die ABS-Steuerventile 4A, 4B weisen jeweils ein Einlass- und ein Auslassventil auf, so dass in gewohnter Weise ein an den Radbremsen 3A, 3B anliegender Bremsdruck pA, pB reduziert oder gehalten werden kann, um auf den erkannten ABS-Bremsschlupffall in entsprechender Weise zu reagieren.

Zum Erkennen eines ABS-Bremsschlupffalles sind an jedem Rad Raddrehzahlsensoren 5A, 5B angeordnet, aus deren ausgegebenen Raddrehzahl-Signalen SRA, SRB von der ABS-Steuereinrichtung 110 beispielsweise eine Radgeschwindigkeit vA, vB und/oder eine Radumfangsbeschleunigung aA, aB des jeweiligen Rades 2A, 2B ermittelt werden kann. Ein ABS-Bremsschlupffall liegt beispielsweise dann vor, wenn die Radgeschwindigkeit vA, vB eine Referenzgeschwindigkeit vRef des Fahrzeuges 200 um eine Geschwindigkeits-Differenz vDiff unterschreitet, d.h. ein Bremsschlupf des jeweiligen Rades 2A, 2B zu hoch wird und/oder die Radumfangsbeschleunigung aA, aB einen Beschleunigungs-Grenzwert aGrenz übersteigt. Daraus kann abgeleitet werden, ob eines der Räder 2A, 2B beim Bremsen dazu neigt, zu blockieren.

Die ABS-Steuereinrichtung 110 weist weiterhin eine Diagnose-Einheit 111 auf, in der überprüft wird, ob die Ansteuerung der ABS-Steuerventile 4A, 4B fehlerfrei umgesetzt wird oder werden kann. Demnach wird geprüft, ob ein Ist-Zustand bezüglich der Ansteuerung des jeweiligen ABS-Steuerventils 4A, 4B mit einem Soll-Zustand, der durch das entsprechende Steuersignal SA, SB vorgegeben wird, übereinstimmt, d.h. eine Anforderung zum Aktivieren eines ABS-Steuerventils 4A, 4B durch die ABS-Steuereinrichtung 110 auch tatsächlich und fehlerfrei umgesetzt wird. Das Ergebnis wird entsprechend in einem radbezogenen Diagnose-Signal SDiag ausgegeben.

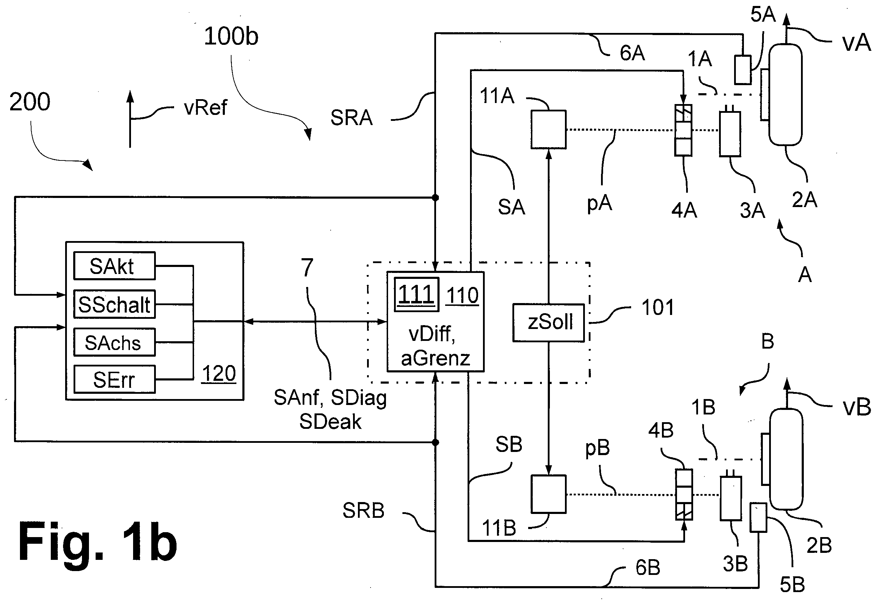

Alternativ kann gemäß Fig. 1b ein hydraulisches Bremssystem 100b vorgesehen sein, das in entsprechender Weise aufgebaut ist und von dem eine Hydraulikflüssigkeit mit einem bestimmten Bremsdruck pA, pB gefördert wird. Im Gegensatz zu einem pneumatischen Bremssystem 100a entfallen hierbei die Relaisventile 10A, 10B und werden durch Bremsdruckerzeuger 11A, 11B ersetzt, die dafür sorgen, dass die Hydraulikflüssigkeit mit einem zum Umsetzen der Fahrzeug-Soll-Verzögerung zSoll benötigten Bremsdruck pA, pB an die ABS-Steuerventile 4A, 4B ausgegeben wird.

Um einen sicheren und zuverlässigen Betrieb des hydraulischen und des pneumatischen Bremssystems 100a, 100b, insbesondere der ABS-Regelung, zu gewährleisten, ist weiterhin eine Überwachungseinrichtung 120 vorgesehen, die den Betrieb der ABS-Steuereinrichtung 110 überwacht bzw. die von der ABS-Steuereinrichtung 110 ausgegebenen Anforderungen überprüft bzw. plausibilisiert. Die Überwachungseinrichtung 120 ist dazu mit Sensorleitungen 6A, 6B verbunden, über die die Raddrehzahlsignale SRA, SRB von den Raddrehzahlsensoren 5A, 5B an die ABS-Steuereinrichtung 110 übermittelt werden. Dadurch kann die Überwachungseinrichtung 120 aus den Raddrehzahlsignalen SRA, SRB - in der gleichen Weise wie die ABS-Steuereinrichtung 110 - einen ABS-Bremsschlupffall erkennen.

Weiterhin ist die Überwachungseinrichtung 120 mit der ABS-Steuereinrichtung 110 über eine Datenleitung 7 verbunden. Über die Datenleitung 7 wird der Überwachungseinrichtung 120 über ein Anforderungs-Signal SAnf übermittelt, ob von der ABS-Steuereinrichtung 110 eine Anforderung zum Aktivieren eines ABS-Steuerventils 4A, 4B ausgegeben wird und welches ABS-Steuerventil 4A, 4B dabei angesteuert wird. Außerdem wird das radbezogene Diagnose-Signal SDiag über die Datenleitung 7 an die Überwachungseinrichtung 120 übertragen.

Zudem kann von der Überwachungseinrichtung 120 ein Deaktivierungs-Signal SDeak über die Datenleitung 7 an die ABS-Steuereinrichtung 110 übermittelt werden. In Abhängigkeit dieses Deaktivierungs-Signals SDeak kann eine Deaktivierung der Ansteuerung aller ABS-Steuerventile 4A, 4B angefordert werden. Dies wird gemäß dieser Ausführungsform von der ABS-Steuereinrichtung 110 durchgeführt, wobei bei einer Anforderung zur Deaktivierung ein Ansteuern oder Aktivieren aller ABS-Steuerventile 4A, 4B verhindert wird.

Somit werden der Überwachungseinrichtung 120 eine Reihe von Eingangs-Signalen SRA, SRB, SAnf, SDiag zur Verfügung gestellt, aus denen aktuell vorliegende Regelgrößen vA, vB, aA, aB für die ABS-Regelung sowie ABS-Steuerparameter SAnf, SDiag, die eine Ansteuerung eines jeweiligen ABS-Steuerventils 4A, 4B betreffen, abgeleitet werden können. Anhand dieser Eingangs-Signale SRA, SRB, SAnf, SDiag prüft die Überwachungseinrichtung 120 wie folgt, ob durch das jeweilige Bremssystem 100a, 100b eine sichere und zuverlässige ABS-Regelung umgesetzt wird. In der Überwachungseinrichtung 120 werden dazu intern die folgenden Signale verarbeitet:
Ein Aktivierungs-Signal SAkt gibt an, ob aus den Raddrehzahl-Signalen SRA, SRB eines beliebigen Rades 2A, 2B folgt, dass ein ABS-Bremsschlupffall vorliegt, wobei dies parallel auch in der ABS-Steuereinrichtung 110 geprüft wird. Deuten die Raddrehzahl-Signale SRA, SRB auf einen ABS-Bremsschlupffall an einem beliebigen Rad 2A, 2B hin, nimmt das Aktivierungs-Signal SAkt den Wert "1" oder "true" an. Folgt aus den Raddrehzahl-Signalen SRA, SRB, dass an keinem der Räder 2A, 2B (mehr) ein ABS-Bremsschlupffall vorliegt, nimmt das Aktivierungs-Signal SAkt den Wert "0" bzw. "false" an. Das Aktivierungs-Signal SAkt kann somit zwischen den beiden Werten "0" und "1" bzw. "false" und "true" wechseln.

Ein weiteres internes Nachlauf-Signal SNach gibt im Wesentlichen das Aktivierungs-Signal SAkt wieder, mit dem Unterschied, dass der Wert des Nachlauf-Signals SNach nach einem Umschalten des Aktivierungs-Signals SAkt von "1" auf "0" bzw. von "true" auf "false" über eine Nachlaufzeitspanne dt1 von beispielsweise 2000 ms unverändert bleibt, d.h. für diese Nachlaufzeitspanne dt1 noch auf dem Wert "1" bzw. "true" gehalten wird. Somit ändert das Nachlauf-Signal SNach im Vergleich zum Aktivierungs-Signal SAkt erst etwas verzögert seinen Wert von "1" auf "0".

Ein weiteres internes Schalt-Signal SSchalt gibt an, ob von der ABS-Steuereinrichtung 110 über die Steuersignale SA, SB eine Anforderung zum Ansteuern bzw. Aktivieren eines beliebigen ABS-Steuerventils 4A, 4B ausgegeben wird, unabhängig davon, ob tatsächlich ein ABS-Bremsschlupffall vorliegt oder nicht. Diese Information wird aus dem Anforderungs-Signal SAnf gewonnen.

Ein zusätzliches Achs-Signal SAchs gibt an, ob eine Anforderung zum Ansteuern bzw. Aktivieren eines oder mehrerer ABS-Steuerventile 4A, 4B an einer bestimmten Fahrzeugachse 1A, 1B, beispielsweise einer Vorderachse, vorliegt. Auch dies folgt aus dem Anforderungs-Signal SAnf, da über dieses auch übertragen wird, welches ABS-Steuerventil 4A, 4B von der ABS-Steuereinrichtung 110 über das jeweilige Steuersignal SA, SB angesteuert werden soll.

Ein weiteres internes Fehler-Signal SErr gibt an, ob über das Diagnose-Signal SDiag ein Fehler bei der Umsetzung an einem oder mehreren ABS-Steuerventilen 4A, 4B einer Fahrzeugachse, beispielsweise einer Hinterachse des Fahrzeuges 200, festgestellt wurde.

Das interne Aktivierungs-Signal SAkt, das Nachlauf-Signal SNach sowie das Schalt-Signal SSchalt werden gemäß diesem Ausführungsbeispiel fahrzeugbezogen erzeugt, d.h. diese geben an, ob an einem beliebigen Rad 2A, 2B des Fahrzeuges 200 ein ABS-Bremsschlupfall vorliegt bzw. gerade ein beliebiges ABS-Steuerventil 4A, 4B angesteuert bzw. aktiviert wird. Dadurch kann fahrzeugbezogen überprüft werden, ob die ABS-Funktionalität des jeweiligen Bremssystems 100a, 100b sicher und zuverlässig umgesetzt wird oder werden kann. Das Achs-Signal SAchs und das Fehler-Signal SErr hingegen werden achsbezogen erzeugt, d.h. wird das entsprechende Ereignis an mindestens einem der ABS-Steuerventile 4A, 4B dieser Fahrzeugachse 1A, 1B erkannt, wird ein entsprechender Wert des internen Signal SAchs, SErr eingestellt.

Folgt aus den fahrzeugbezogenen und/oder achsbezogenen internen Signalen SAkt, SNach, SSchalt, SAchs, SErr eine fehlerhafte oder sicherheitskritische Umsetzung, wird das Deaktivierungs-Signal SDeak mit dem Wert "true" über die Datenleitung 7 an die ABS-Steuereinrichtung 110 ausgegeben, die daraufhin - trotz des Vorliegens einer Anforderung über die Steuersignale SA, SB - ein tatsächliches Aktivieren oder Ansteuern aller ABS-Steuerventile 4A, 4B verhindert.

Gemäß einer ersten, einfacheren Ausführungsform wird dazu überprüft, ob eine Aktivierung eines beliebigen ABS-Steuerventils 4A, 4B durch die ABS-Steuereinrichtung 110 lediglich dann erfolgt, wenn ein ABS-Bremsschlupffall an einem beliebigen Rad 2A, 2B des Fahrzeuges 200 erkannt wurde. Gemäß einer zweiten, aufwendigeren Ausführungsform kann aber auch überprüft werden, ob eine Aktivierung eines beliebigen ABS-Steuerventils 4A, 4B durch die ABS-Steuereinrichtung 110 lediglich dann erfolgt, wenn auch ein ABS-Bremsschlupffall für das diesem ABS-Steuerventil 4A, 4B zugeordnete Rad 2A, 2B erkannt wurde.

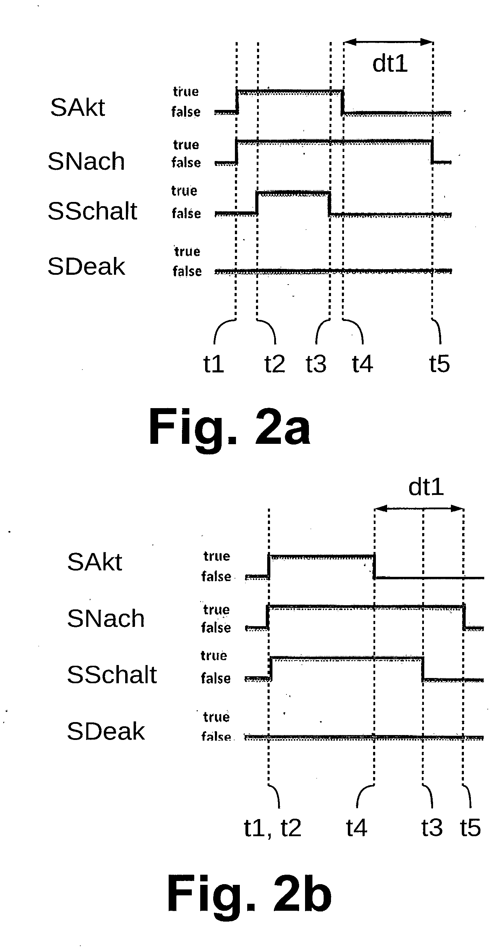

Beispielhaft sind in den Figuren 2a bis 2d zeitliche Verläufe der internen Signale SAkt, SNach und SSchalt sowie des Deaktivierungs-Signals SDeak dargestellt:
Gemäß Fig. 2a wird zu einem ersten Zeitpunkt t1 über das interne Aktivierungs-Signal SAkt auf einen ABS-Bremsschlupffall an einem beliebigen Rad 2A, 2B geschlossen woraufhin dieses den Wert "true" annimmt. Auch das Nachlauf-Signal SNach nimmt zu diesem Zeitpunkt t1 automatisch den Wert "true" an. Zu einem zweiten Zeitpunkt t2 nimmt das Schalt-Signal SSchalt den Wert "true" an, d.h. die ABS-Steuereinrichtung 110 hat eine Aktivierung eines ABS-Steuerventils 4A, 4B angefordert. Zu einem dritten Zeitpunkt t3 wird das entsprechende ABS-Steuerventil 4A, 4B von der ABS-Steuereinrichtung 110 wieder deaktiviert, wodurch der Wert des SchaltSignals SSchalt auf "false" umspringt. Zu einem vierten Zeitpunkt t4 wird anhand der Raddrehzahl-Signale SRA, SRB erkannt, dass an keinem Rad 2A, 2B mehr ein ABS-Bremsschlupffall vorliegt, d.h. das Aktivierungs-Signal SAkt nimmt den Wert "false" an. Zu einem fünften Zeitpunkt t5 nimmt auch das Nachlauf-Signal SNach den Wert "false" an, wobei zwischen dem vierten und dem fünften Zeitpunkt t4, t5 die Nachlaufzeitspanne dt1 vergangen ist.

In Fig. 2b ist ein weiterer zeitlicher Verlauf dargestellt, bei dem die Deaktivierung des entsprechenden ABS-Steuerventils 4A, 4B zum dritten Zeitpunkt t3 erst innerhalb der Nachlaufzeitspanne dt1 stattfindet. Der dritte Zeitpunkt t3 ist somit gegenüber der Fig. 2a nach hinten verschoben.

Fig. 2a und 2b stellen somit den zeitlichen Signalverlauf einer korrekt funktionierenden ABS-Funktion dar, da nach Erkennen eines ABS-Bremsschlupffalles von der ABS-Steuereinrichtung 110 (t1) eine Aktivierung eines ABS-Steuerventils 4A, 4B stattfindet (t2). Liegt kein ABS-Bremsschlupffall mehr vor (t3, t4), wird eine Deaktivierung des ABS-Steuerventils 4A, 4B angefordert bzw. die Anforderung zum Aktivieren zurückgenommen. Die Überwachungseinrichtung 120 wird somit anhand der in den Figuren 2a und 2b gezeigten zeitlichen Signalverläufe der internen Signale SAkt, SNach, SSchalt zu allen Zeitpunkten t1, t2, t3, t4, t5 darauf schließen, dass kein Fehler bei der Ansteuerung der ABS-Steuerventile 4A, 4B vorliegt. Daher wird über den gesamten Zeitraum ein Deaktivierungs-Signal SDeak mit einem Wert "false" an die ABS-Steuereinrichtung 110 ausgegeben, die somit eine Ansteuerung der ABS-Steuerventile 4A, 4B durch das jeweilige Steuersignal SA, SB zulässt.

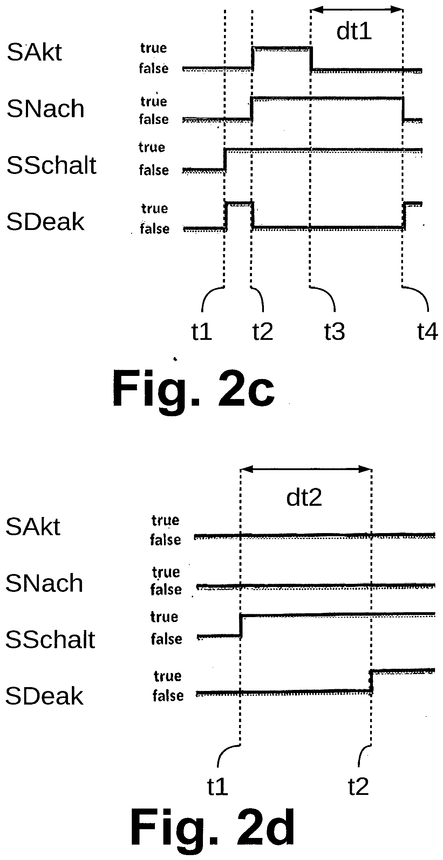

Wird hingegen - wie beispielsweise in Fig. 2c dargestellt - während der Überprüfung bzw. Plausibilisierung festgestellt, dass ein Fehler vorliegt, wird ein Deaktivierungs-Signal SDeak mit einem Wert "true" an die ABS-Steuereinrichtung 110 ausgegeben woraufhin eine Ansteuerung aller ABS-Steuerventile 4A, 4B trotz des Vorliegens einer Anforderung durch die ABS-Steuereinrichtung 110 deaktiviert bzw. verhindert wird. D.h. eine über die Steuersignale SA, SB angeforderte Aktivierung der entsprechenden ABS-Steuerventile 4A, 4B wird nicht umgesetzt. Dieses Verhindern der Aktivierung der ABS-Steuerventile 4A, 4B durch die ABS-Steuereinrichtung 110 erfolgt so lange, bis die Überwachungseinrichtung 120 wieder plausible Signale SAkt, SNach, SSchalt ermittelt und somit ein Deaktivierungs-Signal SDeak ausgibt, das den Wert "true" aufweist.

Gemäß Fig. 2c wird demnach zu einem ersten Zeitpunkt t1 eine Anforderung zum Aktivieren eines beliebigen ABS-Steuerventils 4A, 4B über das Schalt-Signal SSchalt festgestellt, obwohl sowohl das Aktivierungs-Signal SAkt als auch das Nachlauf-Signal SNach den Wert "false" aufweisen, d.h. es wurde kein ABS-Bremsschlupffall an irgendeinem Rad 2A, 2B des Fahrzeuges 200 erkannt und auch die Nachlaufzeitspanne dt1 ist nicht einschlägig. Die Überwachungseinrichtung 120 schließt daher in diesem Beispiel auf eine Anforderung zur Aktivierung des entsprechenden ABS-Steuerventils 4A, 4B aufgrund eines Fehlers, beispielsweise eines Software-Fehlers in der ABS-Steuereinrichtung 110. Das Deaktivierungs-Signal SDeak nimmt deshalb den Wert "true" an, woraufhin die tatsächliche Umsetzung der Steuersignale SA, SB durch Deaktivieren aller ABS-Steuerventile 4A, 4B unterbunden wird.

Da die ABS-Steuereinrichtung 110 in Fig. 2c - aus welchem Grund auch immer - dennoch weiterhin eine Anforderung zum Aktivieren des entsprechenden ABS-Steuerventils 4A, 4B erzeugt, weist das interne Schalt-Signal SSchalt weiterhin den Wert "true" auf, auch wenn aufgrund des Deaktivierungs-Signals SDeak = "true" eine tatsächliche Aktivierung aller ABS-Steuerventile 4A, 4B unterdrückt wird.

Zu einem nachfolgenden zweiten Zeitpunkt t2 nehmen das Aktivierungs-Signal SAkt und auch das Nachlauf-Signal SNach den Wert "true" an, d.h. ein ABS-Bremsschlupffall an einem beliebigen Rad 2A, 2B wurde wieder erkannt. Zu diesem Zeitpunkt basiert die angeforderte Aktivierung des entsprechenden ABS-Steuerventils 4A, 4B nicht mehr auf einem Fehler sondern auf dem positiven Erkennen eines ABS-Bremsschlupffalles, so dass das Deaktivierungs-Signal SDeak zu diesem zweiten Zeitpunkt t2 wieder den Wert "false" annimmt und eine Ansteuerung der ABS-Steuerventile 4A, 4B über die Steuersignale SA, SB wieder zugelassen wird. Nach dem Ablauf der Nachlaufzeitspanne dt1 zu einem vierten Zeitpunkt t4 weist das Schalt-Signal SSchalt allerdings noch immer den Wert "true" auf, so dass erneut auf einen Fehler geschlossen werden kann: das Deaktivierungs-Signal SDeak nimmt wieder den Wert "true" an und eine Aktivierung aller ABS-Steuerventile 4A, 4B wird wieder verhindert.

Gemäß Fig. 2d wird ergänzend vor dem Umschalten des Deaktivierungs-Signals SDeak vom Wert "false" auf "true" nach Erkennen eines Fehlers zu einem ersten Zeitpunkt t1 eine feste Toleranzzeit dt2 von beispielsweise 50ms gewartet. D.h. ein Verhindern einer Aktivierung der ABS-Steuerventile 4A, 4B erfolgt erst dann, wenn auch nach dieser Toleranzzeit dt2 nach Erkennen eines Fehlers kein ABS-Bremsschlupffall über das Nachlauf-Signal SNach festgestellt wurde, d.h. das Nachlauf-Signal SNach auch nach der Toleranzzeit dt2 zu einem zweiten Zeitpunkt t2 nicht den Wert "true" annimmt. Für Fig. 2c heißt das: Falls zusätzlich eine Toleranzzeit dt2 berücksichtigt wird und der Zeitraum zwischen dem ersten und dem zweiten Zeitpunkt t1, t2 kleiner ist als die Toleranzzeit dt2, bleibt das Deaktivierungs-Signal SDeak in Fig. 2c zwischen dem ersten und dem zweiten Zeitpunkt t1, t2 auf dem Wert "false".

Durch Berücksichtigung der Toleranzzeit dt2 können Verzögerungen in der Signalübertragung auf die Überwachungseinrichtung 120 und eine daraus folgende Verzögerung bei der Ermittlung des Nachlauf-Signals SNach einbezogen werden. Je nach Bremssystem 100a, 100b kann auch eine geringere Toleranzzeit dt2 angesetzt werden.

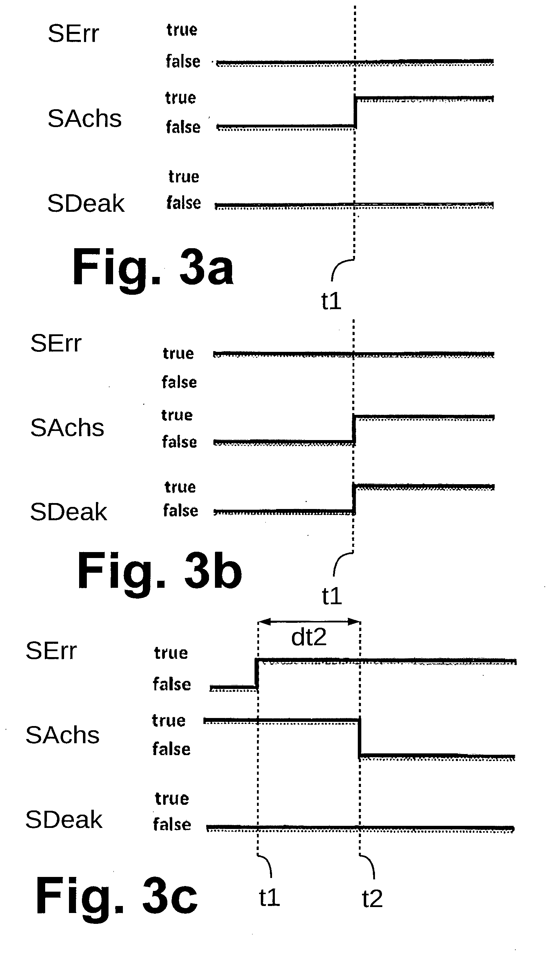

Gemäß einer weiteren Ausführung, die in den Figuren 3a bis 3e dargestellt ist, wird von der Überwachungseinrichtung 120 achsbezogen überprüft, ob eine Aktivierung der ABS-Steuerventile 4A, 4B im Hinblick auf die Sicherheit korrekt erfolgt. Im Folgenden wird dazu der Bremskreis A mit seinen entsprechenden Komponenten der Hinterachse und der Bremskreis B mit seinen entsprechenden Komponenten der Vorderachse des Fahrzeuges 200 zugeordnet.

Für die Überprüfung wird der Wert des achsbezogenen Fehler-Signals SErr in Abhängigkeit des Diagnose-Signals SDiag derartig festgelegt, dass das Fehler-Signal SErr den Wert "true" annimmt, wenn mindestens eines der ABS-Steuerventile 4A der Hinterachse 1A nicht korrekt angesteuert wird oder dieses die Anforderungen nicht vollständig umsetzt. Über das Achs-Signal SAchs wird gleichzeitig abgefragt, ob eine Aktivierung eines ABS-Steuerventils 4B an der Vorderachse 1B vorliegt.

Gemäß Fig. 3a ist der Fall gezeigt, dass das Fehler-Signal SErr über den gesamten zeitlichen Signalverlauf den Wert "false" annimmt, d.h. die ABS-Steuerventile 4A der Hinterachse 1A funktionieren fehlerfrei. Eine angeforderte Aktivierung eines ABS-Steuerventils 4B an der Vorderachse 1B zu einem ersten Zeitpunkt t1, die über das Schalt-Signal SSchalt = "true" angegeben wird, wird somit zugelassen: das Deaktivierungs-Signal SDeak weist über den gesamten zeitlichen Signalverlauf den Wert "false" auf.

Gemäß Fig. 3b hingegen weist das Fehler-Signal SErr über den gesamten zeitlichen Signalverlauf den Wert "true" auf, d.h. eines der ABS-Steuerventile 4A der Hinterachse 1A setzt die Anforderung nicht fehlerfrei um. Daraufhin folgt eine Aktivierung eines ABS-Steuerventils 4B der Vorderachse 1B zu einem ersten Zeitpunkt t1. Dies kann zu einer Instabilität des Fahrzeuges 200 führen, da lediglich die Vorderachse 1B bremsschlupfgeregelt abgebremst wird. Daher ist vorgesehen, die ABS-Regelung zu unterbinden: das Deaktivierungs-Signal SDeak nimmt zum ersten Zeitpunkt t1 den Wert "true" an, eine Anforderung über das Steuersignal SB wird von den ABS-Steuerventilen 4B der Vorderachse 1B nicht mehr umgesetzt.

Gemäß Fig. 3c wird zusätzlich die Toleranzzeit dt2 berücksichtigt, um Signalverzögerungen einzubeziehen. Demnach nimmt das Fehler-Signal SErr zu einem ersten Zeitpunkt t1 den Wert "true" an, d.h. eines der ABS-Steuerventile 4A der Hinterachse 1A setzt die Anforderung nicht fehlerfrei um. Gleichzeitig liegt eine Anforderung zum Aktivieren eines ABS-Steuerventils 4B an der Vorderachse 1B vor, d.h. SAchs = "true", die allerdings zu einem zweiten Zeitpunkt t2 zurückgenommen wird, d.h. SAchs = "false". Da das Umschalten innerhalb der Toleranzzeit dt2 stattfindet, wird eine mögliche Signalverzögerung berücksichtigt, ohne dass aufgrund der geringen Toleranzzeit dt2 eine Instabilität des Fahrzeugs 200 in Kauf genommen werden muss.

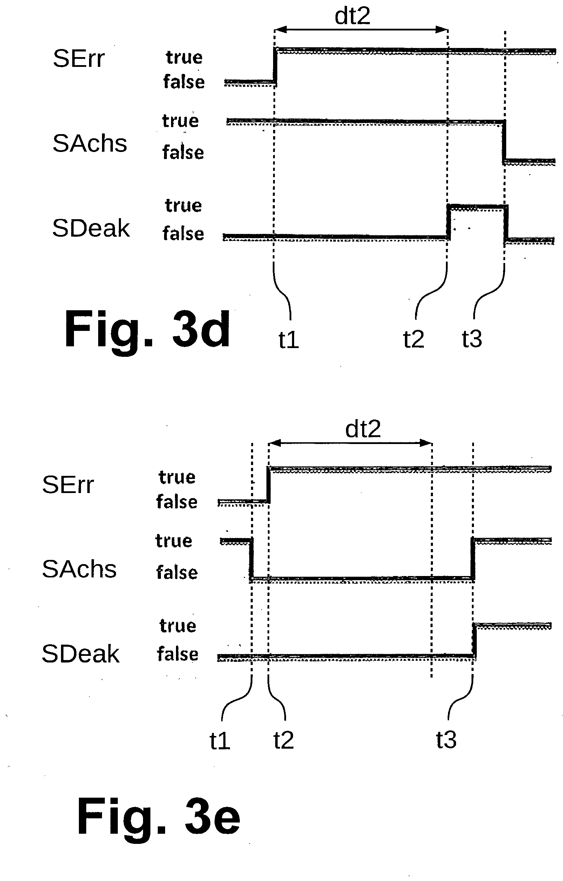

Gemäß dem zeitlichen Signalverlauf in Fig. 3d nimmt das Fehler-Signal SErr zu einem ersten Zeitpunkt t1 den Wert "true" an, d.h. eines der ABS-Steuerventile 4A der Hinterachse 1A setzt die Anforderung nicht fehlerfrei um. Gleichzeitig liegt eine Anforderung zum Aktivieren eines ABS-Steuerventils 4B an der Vorderachse 1B vor, d.h. SAchs = "true", die erst nach der Toleranzzeit dt2 zu einem dritten Zeitpunkt t3 zurückgenommen wird, d.h. SAchs = "false". Nach Ablauf der Toleranzzeit dt2 zu einem zweiten Zeitpunkt t2 wird daher das Deaktivierungs-Signal SDea auf "true" gesetzt, und eine tatsächliche Aktivierung des ABS-Steuerventils 4B der Vorderachse 1B verhindert, um keinen instabilen Fahrzustand zu riskieren. Zum dritten Zeitpunkt t3 wird das Deaktivierungs-Signal SDeak auf "false" gesetzt, da auch SAchs den Wert "false" annimmt.

Gemäß Fig. 3e ist ein weiterer zeitlicher Signalverlauf dargestellt, wonach zu einem ersten Zeitpunkt t1 eine Anforderung zum Aktivieren eines der ABS-Steuerventile 4B der Vorderachse 1B zurückgenommen wird. Zu einem zweiten Zeitpunkt t2 nimmt das Fehler-Signal SErr den Wert "true" an, d.h. eines der ABS-Steuerventile 4A der Hinterachse 1A setzt die Anforderung nicht fehlerfrei um. Nach Ablauf der Toleranzzeit dt2 liegt zu einem dritten Zeitpunkt t3 t1 eine Anforderung zum Aktivieren eines der ABS-Steuerventile 4B der Vorderachse 1B vor. Da die Toleranzzeit dt2 bereits verstrichen ist, wird das Deaktivierungs-Signal SDeak auf "true" gesetzt, um keine instabilen Fahrzustände zu riskieren.

Somit kann in unterschiedlichen Ausführungsformen, die alternativ oder nacheinander durchgeführt werden können, ein sicherer und zuverlässiger Betrieb der ABS-Regelung gewährleistet werden, indem die internen Signale SAkt, SNach, SSchalt, SAchs, SErr entsprechend überprüft bzw. plausibilisiert werden und bei Erkennen eines Fehlers über das Deaktivierungs-Signal SDeak eine Ansteuerung aller ABS-Steuerventile 4A, 4B verhindert wird.

Das erfindungsgemäße Verfahren kann dazu beispielsweise wie folgt ablaufen:
Zunächst wird die Überwachung in einem anfänglichen Schritt St0 initialisiert.

Anschließend werden in einem ersten Schritt St1 in der Überwachungseinrichtung 120 die achsbezogenen und/oder fahrzeugbezogenen internen Signale SAkt, SNach, SSchalt, SAchs, SErr nach den oben genannten Prinzipien aus den Eingangs-Signalen SRA, SRB, SDiag, SAnf ermittelt, wobei aus den Eingangs-Signalen SRA, SRB, SDiag, SAnf aktuell vorliegende Regelgrößen vA, vB, aA, aB für die ABS-Regelung sowie ABS-Steuerparameter SAnf, SDiag, die eine Ansteuerung eines ABS-Steuerventils 4A, 4B betreffen, abgeleitet werden können.

Dazu wird in Abhängigkeit der Raddrehzahlsignale SRA, SRB, des Diagnose-Signals SDiag sowie des Anforderungs-Signals SAnf das fahrzeugbezogene Aktivierungs-Signal SAkt, das das Vorliegen eines ABS-Bremsschlupffall an einem beliebigen Rad 2A, 2B angibt, das fahrzeugbezogene Nachlauf-Signal SNach sowie das fahrzeugbezogene Schalt-Signal SSchalt, das eine Anforderung zur Aktivierung eines beliebigen ABS-Steuerventils 4A, 4B angibt, erzeugt. Weiterhin werden daraus das achsbezogene Achs-Signal SAchs sowie das achsbezogene Fehler-Signal SErr erzeugt.

In einem darauffolgenden zweiten Schritt St2, wird anhand der internen Signale SAkt, SNach, SSchalt, SAchs, SErr überprüft, ob die ABS-Funktionalität des jeweiligen Bremssystems 100a, 100b sicher und zuverlässig umgesetzt wird:
Dazu wird in einem ersten Teilschritt St2.1 über das fahrzeugbezogene Aktivierungs-Signal SAkt bzw. das fahrzeugbezogene Nachlauf-Signal SNach, d.h. unter Berücksichtigung einer Nachlaufzeitspanne dt1, überprüft, ob eine Anforderung zur Aktivierung eines ABS-Steuerventils 4A, 4B durch die ABS-Steuereinrichtung 110 lediglich dann erfolgt, wenn auch ein ABS-Bremsschlupffall an einem beliebigen Rad 2A, 2B des Fahrzeuges 200 vorliegt. D.h. es wird geprüft, ob das Nachlauf-Signal SNach den Wert "true" aufweist, wenn für das Schalt-Signal SSchalt der Wert "true" ermittelt wurde. Dazu kann in einem optionalen dritten Schritt St3 zusätzlich eine Toleranzzeit dt2 berücksichtigt werden, um Signalverzögerungen einzubeziehen.

In einem zweiten Teilschritt St2.2, der nach oder vor dem ersten Teilschritt St2.1 oder alternativ zum ersten Teilschritt St2.1 stattfinden kann, wird anhand des achsbezogenen Achs-Signals SAchs und des Fehler-Signals SErr überprüft, ob eine Aktivierung eines ABS-Steuerventils 4B an der Vorderachse 1B angefordert wurde, während mindestens ein ABS-Steuerventil 4A an der Hinterachse 1A nicht fehlerfrei funktioniert. Demnach wird geprüft, ob das Fehler-Signal SErr den Wert "false" aufweist, wenn für das Achs-Signal SAchs der Wert "true" ermittelt wurde. Auch hier kann im optionalen dritten Schritt St3 zusätzlich eine Toleranzzeit dt2 berücksichtigt werden, um Signalverzögerungen einzubeziehen.

Wird im ersten Teilschritt 2.1 - ggf. unter Berücksichtigung der Toleranzzeit dt2 im dritten Schritt St3 - erkannt, dass das Schalt-Signal SSchalt den Wert "true" annimmt, das Nachlauf-Signal SNach aber den Wert "false", wird in einem vierten Schritt St4 das Deaktivierungs-Signal SDeak auf den Wert "true" gesetzt; eine Aktivierung aller ABS-Steuerventile 4A, 4B wird unterbunden. Gleiches gilt, falls im zweiten Teilschritt St2.2 - ggf. unter Berücksichtigung der Toleranzzeit dt2 im dritten Schritt St3 - erkannt wurde, dass das Achs-Signal SAchs den Wert "true" aufweist und gleichzeitig auch das Fehler-Signal SAchs den Wert "true" annimmt.

In allen anderen Fällen nimmt das Deaktivierungs-Signal SDeak den Wert "false" an und das entsprechende ABS-Steuerventil 4A, 4B kann normal angesteuert werden.

In einem fünften Schritt St5 findet dann, je nachdem ob das Deaktivierungs-Signal den Wert "true" oder "false" aufweist, eine Aktivierung oder keine Aktivierung der ABS-Steuerventile 4A, 4B über die Steuersignale SA, SB statt, um auf einen erkannten ABS-Bremsschlupffall reagieren zu können.

### Bezugszeichenliste (Bestandteil der Beschreibung)

- 1A, 1B: Fahrzeugachsen
- 2A, 2B: Räder
- 3A, 3B: Radbremsen
- 4A, 4B: ABS-Steuerventil
- 5A, 5B: Raddrehzahlsensoren
- 6A, 6B: Sensorleitungen
- 7: Datenleitung
- 10A, 10B: Relaisventil
- 11A, 11B: Bremsdruckerzeuger

- 100a: pneumatisches Bremssystem
- 100b: hydraulisches Bremssystem
- 101: Steuereinrichtung
- 110: ABS-Steuereinrichtung
- 111: Diagnoseeinheit
- 120: Überwachungseinrichtung
- 200: Fahrzeug

- A, B: Bremskreise
- aA, aB: Radumfangsbeschleunigung
- aGrenz: Beschleunigungs-Grenzwert
- dt1: Nachlaufzeitspanne
- dt2: Toleranzzeit
- pA, pB: Bremsdrücke
- SA, SB: Steuersignale
- SAchs: Achs-Signal
- SAkt: Aktivierungs-Signal
- SDeak: Deaktivierungs-Signal
- SDiag: Diagnose-Signal
- SErr: Fehler-Signal
- SNach: Nachlauf-Signal
- SRA, SRB: Raddrehzahlsignale
- SSchalt: Schalt-Signal
- t1, t2, t3, t4, t5: Zeitpunkte
- vA, vB: Radgeschwindigkeit
- vDiff: Differenz-Geschwindigkeit
- vRef: Referenzgeschwindigkeit
- zSoll: Fahrzeug-Soll-Verzögerung

- St0, St1, St2 (St2.1, St2.2), St3, St4, St5: Schritte des Verfahrens

## Patentansprüche

1. Verfahren zum Überwachen einer ABS-Regelung in einem elektrisch steuerbaren Bremssystem (100a, 100b) in einem Fahrzeug (200), insbesondere Nutzfahrzeug (200), mit mindestens den folgenden Schritten:
Einlesen von Eingangs-Signalen (SRA, SRB, SDiag, SAnf), wobei aus den Eingangs-Signalen (SRA, SRB, SDiag, SAnf) aktuell vorliegende Regelgrößen (vA, vB, aA, aB) für die ABS-Regelung sowie ABS-Steuerparameter (SAnf, SDiag), die eine bremsschlupfgeregelte Ansteuerung (SA, SB) eines ABS-Steuerventils (4A, 4B) des Bremssystems (100a, 100b) betreffen, abgeleitet werden können (St1);
Überprüfen, ob aus den Eingangs-Signalen (SRA, SRB, SDiag, SAnf) folgt, dass eine Aktivierung eines beliebigen einem Rad (2A, 2B) des Fahrzeuges (200) zugeordneten ABS-Steuerventils (4A, 4B) angefordert wird, und
- ob aus den Regelgrößen (vA, vB, aA, aB) folgt, dass ein ABS-Bremsschlupffall (vDiff, aGrenz) an mindestens einem Rad (2A, 2B) des Fahrzeuges (200) vorliegt (St2, St2.1), und/oder
- ob aus den ABS-Steuerparametern (SDiag, SAnf) folgt, dass weitere ABS-Steuerventile (4B), die mindestens einem weiteren Rad (2B) des Fahrzeuges (200) zugeordnet sind, eine bremsschlupfgeregelte Ansteuerung (SB) fehlerfrei umsetzen (St2, St2.2); und
Ausgeben eines Deaktivierungs-Signals (SDeak) in Abhängigkeit der Überprüfung (St2) zum situationsabhängigen Verhindern einer Ansteuerung (SA, SB) der ABS-Steuerventile (4A, 4B) (St4), wobei eine Ansteuerung der ABS-Steuerventile (4A, 4B) verhindert wird, wenn eine Aktivierung eines beliebigen ABS-Steuerventils (4A, 4B) angefordert wird und kein ABS-Bremsschlupffall (vDiff, aGrenz) an mindestens einem der Räder (2A, 2B) des Fahrzeuges (200) erkannt wurde, **dadurch gekennzeichnet, dass** bei der Überprüfung (St2.1, St2.2) eine Toleranzzeit (dt2) berücksichtigt wird, wobei eine Ansteuerung der ABS-Steuerventils (4A, 4B) erst dann verhindert wird, wenn
- nach dem Ansteuern eines beliebigen ABS-Steuerventils (4A, 4B) und nach dem Ablauf der Toleranzzeit (dt2) kein ABS-Bremsschlupffall (vDiff, aGrenz) an mindestens einem Rad (2A, 2B) erkannt wurde und/oder
- nach dem Erkennen einer fehlerhaften Umsetzung eines weiteren ABS-Steuerventils (4B) und nach dem Ablauf der Toleranzzeit (dt2) die Ansteuerung (SA) eines beliebigen ABS-Steuerventils (4A) beibehalten wird.

2. Verfahren nach Anspruch 1, **dadurch gekennzeichnet, dass** bei der Überprüfung (St2.1) eine Nachlaufzeitspanne (dt1) berücksichtigt wird, wobei eine Ansteuerung der ABS-Steuerventile (4A, 4B) erst dann verhindert wird, wenn nach dem Wegfall eines ABS-Bremsschlupffalles (vDiff, aGrenz) an mindestens einem der Räder (2A, 2B) und nach Ablauf der Nachlaufzeitspanne (dt1) eine Aktivierung eines beliebigen ABS-Steuerventils (4A, 4B) angefordert wird.

3. Verfahren nach einem der Ansprüche 1 bis 2, **dadurch gekennzeichnet, dass** eine Ansteuerung der ABS-Steuerventils (4A) verhindert wird, wenn eine Aktivierung eines beliebigen ABS-Steuerventils (4A, 4B) an einem Rad (2A) des Fahrzeuges (200) angefordert wird und ein weiteres ABS-Steuerventil (4B) an mindestens einem weiteren Rad (2B) des Fahrzeuges (200) eine bremsschlupfgeregelte Ansteuerung (SB) nicht fehlerfrei umsetzt.

4. Verfahren nach einem der vorhergehenden Ansprüche, **dadurch gekennzeichnet, dass** das eine Rad (2A) an einer ersten Achse (1A), vorzugsweise einer Vorderachse (1A) des Fahrzeuges (200), angeordnet ist und das weitere Rad (2B) an einer zweiten Achse (2B), vorzugsweise einer Hinterachse (1B) des Fahrzeuges (200), so dass eine achsbezogene Überprüfung stattfindet.

5. Verfahren nach einem der vorhergehenden Ansprüche, **dadurch gekennzeichnet, dass** überprüft wird, ob aus den Eingangs-Signalen (SRA, SRB, SDiag, SAnf) folgt, dass eine Aktivierung eines beliebigen einem Rad (2A, 2B) des Fahrzeuges (200) zugeordneten ABS-Steuerventils (4A, 4B) angefordert wird, und ob aus den Regelgrößen (vA, vB, aA, aB) folgt, dass ein ABS-Bremsschlupffall (vDiff, aGrenz) an dem dem angesteuerten ABS-Steuerventil (4A, 4B) zugeordneten Rad (2A, 2B) des Fahrzeuges (200) vorliegt.

6. Elektronisch steuerbares Bremssystem (100a, 100b), geeignet zur Durchführung des Verfahrens nach einem der vorhergehenden Ansprüche, mindestens aufweisend:
ABS-Steuerventile (4A, 4B) zum bremsschlupfgeregelten Abbremsen der Räder (2A, 2B) einer Fahrzeugachse (1A, 1B),
eine ABS-Steuereinrichtung (110) zur Steuerung der ABS-Regelung, eine Überwachungseinrichtung (120) zum Durchführen der Überprüfung (St2), wobei die Überwachungseinrichtung (120) ausgebildet ist,
Eingangs-Signale (SRA, SRB, SDiag, SAnf) einzulesen, wobei aus den Eingangs-Signalen (SRA, SRB, SDiag, SAnf) aktuell vorliegende Regelgrößen (vA, vB, aA, aB) für die ABS-Regelung sowie ABS-Steuerparameter (SAnf, SDiag), die eine bremsschlupfgeregelte Ansteuerung (SA, SB) eines ABS-Steuerventils (4A, 4B) des Bremssystems (100a, 100b) betreffen, herleitbar sind, und
ein Deaktivierungs-Signal (SDeak) in Abhängigkeit der Überprüfung (St2) zu erzeugen und auszugeben.

7. Elektronisch steuerbares Bremssystem (100a, 100b) nach Anspruch 6, **dadurch gekennzeichnet, dass** in der Überwachungseinrichtung (120) aus den Eingangs-Signalen (SRA, SRB, SDiag, SAnf) interne Signale (SAkt, SNach, SSchalt, SAchs, SErr) ermittelbar sind, in Abhängigkeit dessen die Überprüfung (St2) durchführbar ist, wobei
ein Aktivierungs-Signal (SAkt) angibt, ob ein ABS-Bremsschlupffall (vDiff, aGrenz) an mindestens einem Rad (2A, 2B) des Fahrzeuges (200) vorliegt, ein Nachlauf-Signal (SNach) eine Nachlaufzeitspanne (dt1) nach dem Wegfall eines ABS-Bremsschlupffalles (vDiff, aGrenz) an mindestens einem Rad (2A, 2B) des Fahrzeuges (200) berücksichtigt,
ein Schalt-Signal SSchalt eine Ansteuerung (SA, SB) zur Aktivierung eines beliebigen ABS-Steuerventils (4A, 4B) des Fahrzeuges (200) angibt,
ein Achs-Signal (SAchs) eine achsbezogene Ansteuerung (SA, SB) zur Aktivierung der ABS-Steuerventile (4A, 4B) angibt, und
ein Fehler-Signal (SErr) achsbezogen angibt, ob eine bremsschlupfgeregelte Ansteuerung (SA, SB) durch ein ABS-Steuerventil (4A, 4B) fehlerfrei umsetzbar ist.

8. Elektronisch steuerbares Bremssystem (100a, 100b) nach Anspruch 6 oder 7, **dadurch gekennzeichnet, dass** das Bremssystem ein hydraulisches Bremssystem (100b) oder ein pneumatisches Bremssystem (100a) ist.

9. Fahrzeug (200), insbesondere Nutzfahrzeug (200), mit einem elektronisch gesteuerten Bremssystem (100a, 100b) nach einem der Ansprüche 6 bis 8.

## Claims

1. A method for monitoring an ABS control process in an electrically controllable brake system (100a, 100b) in a vehicle (200), in particular a utility vehicle (200), comprising at least the following steps:
reading in input signals (SRA, SRB, SDiag, SAnf), wherein currently present control variables (vA, vB, aA, aB) for the ABS control process and ABS control parameters (SAnf, SDiag) which relate to a brake-slip-controlled actuation process (SA, SB) of an ABS control valve (4A, 4B) of the brake system (100a, 100b) can be derived from the input signals (SRA, SRB, SDiag, SAnf) (St1);
checking whether it follows from the input signals (SRA, SRB, SDiag, SAnf) that activation of any ABS control valve (4A, 4B) which is assigned to any one wheel (2A, 2B) of the vehicle (200) is being requested, and
- whether it follows from the control variables (vA, vB, aA, aB) that an ABS brake slip situation (vDiff, aGrenz) is present on at least one wheel (2A, 2B) of the vehicle (200) (St2, St2.1), and/or
- whether it follows from the ABS control parameters (SDiag, SAnf) that further ABS control valves (4B), which are assigned to at least one further wheel (2B) of the vehicle (200), implement a brake-slip-controlled actuation process (SB) without fault (St2, St2.2); and
outputting a deactivation signal (SDeak) as a function of the check (St2) in order to prevent actuation (SA, SB) of the ABS control valves (4A, 4B) as a function of the situation (St4), wherein an actuation of the ABS control valves (4A, 4B) is prevented, when an activation of any ABS control valve (4A, 4B) is requested and no ABS brake slip situation (vDiff, aGrenz) has been detected on at least one of the wheels (2A, 2B) of the vehicle (200), **characterized in that** during the check (St.2.1, St2.2) a tolerance time (dt2) is taken into consideration, wherein an actuation of the ABS control valve (4A, 4B) is only prevented, if
- after the actuation of any ABS control valve (4A, 4B) and after the tolerance time (dt2) has elapsed, no ABS brake slip incident (vDiff, aGrenz) has been detected on at least one wheel (2A, 2B) and/or
- after the detection of an incorrect implementation of a further ABS control valve (4B) and after the tolerance time (dt2) has elapsed, the actuation (SA) of any ABS control valve (4A) is maintained.

2. The method according to claim 1, **characterized in that** during the check (St2.1) a run-on time period (dt1) is taken into consideration, wherein an actuation of the ABS control valves (4A, 4B) is only prevented if after the elimination of an ABS brake slip incident (vDiff, aGrenz) on at least one of the wheels (2A, 2B) and after the run-on time period (dt1) has elapsed an activation of any ABS control valve (4A, 4B) is requested.

3. The method according to any of claims 1 to 2, **characterized in that** an actuation of the ABS control valve (4A) is prevented if an activation of any ABS control valve (4A, 4B) on a wheel (2A) of the vehicle (200) is requested and a further ABS control valve (4B) on at least one further wheel (2B) of the vehicle (200) incorrectly implements a brake slip-controlled actuation (SB).

4. The method according to any of the foregoing claims, **characterized in that** a wheel (2A) is arranged on a first axle (1A), preferably a front axle (1A) of the vehicle (200) and the further wheel (2B) is arranged on a second axle (2B), preferably a rear axle (1B) of the vehicle (200), so that a per axle check is performed.

5. The method according to any of the foregoing claims, **characterized in that** it is checked whether it follows from the input signals (SRA, SRB, SDiag, SAnf) that an activation of any ABS control valve (4A, 4B) assigned to a wheel (2A, 2B) of the vehicle (200) is requested, and whether it follows from the control variables (vA, vB, aA, aB) that an ABS brake slip incident (vDiff, aGrenz) is present at the wheel (2A, 2B) of the vehicle (200) assigned to the actuated ABS control valve (4A, 4B) .

6. An electronically controlled brake system (100a, 100b), suitable for carrying out the method according to any of the foregoing claims, comprising at least:
ABS control valves (4A, 4B) for braking the wheels (2A, 2B) of a vehicle axle (1A, 1B) in a brake-slip-controlled manner,
an ABS control unit (110) for controlling the ABS control process,
a monitoring unit (120) for performing the check (St2), wherein the monitoring unit (120) is configured
to read input signals (SRA, SRB, SDiag, SAnf), wherein it is possible from the input signals (SRA, SRB, SDiag, SAnf) to derive currently present control variables (vA, vB, aA, aB) for the ABS control process and ABS control parameters (SAnf, SDiag) which relate to a brake slip-controlled actuation process (SA, SB) of an ABS control valve (4A, 4B) of the brake system (100a, 100b), and
to generate and output a deactivation signal (SDeak) as a function of the check (St2).

7. The electronically controllable brake system (100a, 100b) according to claim 6, **characterized in that** it is possible in the monitoring unit (120) from the input signals (SRA, SRB, SDiag, SAnf) to determine internal signals (SAkt, SNach, SSchalt, SAchs, SErr) as a function of which it is possible to perform the check (St2), wherein
an activation signal (SAkt) indicates whether an ABS brake slip incident (vDiff, aGrenz) is present on at least one wheel (2A, 2B) of the vehicle (200),
a run-on signal (SNach) takes into consideration a run-on time period (dt1) after the elimination of an ABS brake slip incident (vDiff, aGrenz) on at least one wheel (2A, 2B) of the vehicle (200),
a switching signal (SSchalt) indicates an actuation (SA, SB) for the activation of any ABS control valve (4A, 4B) of the vehicle (200),
an axle signal (SAchs) indicates a per axle actuation (SA, SB) for the activation of the ABS control valve (4A, 4B), and
an error signal (SErr) indicates in a per axle manner whether a brake slip-controlled actuation (SA, SB) may be correctly implemented by an ABS control valve (4A, 4B).

8. The electronically controllable brake system (100a, 100b) according to claim 6 or 7, **characterized in that** the brake system is a hydraulic brake system (100b) or a pneumatic brake system (100a).

9. A vehicle (200), in particular a utility vehicle (200), having an electronically controllable brake system (100a, 100b) according to any of claims 6 to 8.

## Revendications

1. Procédé pour surveiller une régulation ABS dans un système de freinage (100a, 100b) pouvant être commandé électriquement dans un véhicule (200), en particulier véhicule utilitaire (200), avec au moins les étapes suivantes :
la lecture de signaux d'entrée (SRA, SRB, SDiag, SAnf), dans lequel des grandeurs de régulation (vA, vB, aA, aB) actuellement présentes pour la régulation ABS ainsi que des paramètres de commande ABS (SAnf, SDiag), qui concernent une commande à régulation du glissement au freinage (SA, SB) d'une soupape de commande ABS (4A, 4B) du système de freinage (100a, 100b), peuvent être déduits des signaux d'entrée (SRA, SRB, SDiag, SAnf) (St1) ;
le fait de vérifier s'il résulte des signaux d'entrée (SRA, SRB, SDiag, SAnf) qu'une activation d'une soupape de commande ABS (4A, 4B) quelconque associée à une roue (2A, 2B) du véhicule (200) est demandée, et
- s'il résulte des grandeurs de régulation (vA, vB, aA, aB) qu'un cas de glissement au freinage ABS (vDiff, aGrenz) sur au moins une roue (2A, 2B) du véhicule (200) est présent (St2, St2.1), et/ou
- s'il résulte des paramètres de commande ABS (SDiag, SAnf) que d'autres soupapes de commande ABS (4B), qui sont associées à au moins une autre roue (2B) du véhicule (200), mettent en œuvre sans défaut une commande (SB) à régulation du glissement au freinage (St2, St2.2) ; et
l'émission d'un signal de désactivation (SDeak) en fonction de la vérification (St2) pour empêcher en fonction de la situation une commande (SA, SB) des soupapes de commande ABS (4A, 4B) (St4), dans lequel une commande des soupapes de commande ABS (4A, 4B) est empêchée lorsqu'une activation d'une soupape de commande ABS (4A, 4B) quelconque est demandée et qu'aucun cas de glissement au freinage ABS (vDiff, aGrenz) sur au moins une des roues (2A, 2B) du véhicule (200) a été identifié, **caractérisé en ce que** lors de la vérification (St2.1, St2.2) un temps de tolérance (dt2) est pris en compte, dans lequel une commande de la soupape de commande ABS (4A, 4B) n'est empêchée que lorsque
- après la commande d'une soupape de commande ABS (4A, 4B) quelconque et après l'expiration du temps de tolérance (dt2) aucun cas de glissement au freinage ABS (vDiff, aGrenz) sur au moins une roue (2A, 2B) n'a été identifié et/ou
- après l'identification d'une mise en œuvre sans défaut d'une autre soupape de commande ABS (4B) et après l'expiration du temps de tolérance (dt2) la commande (SA) d'une soupape de commande ABS (4A) quelconque est conservée.

2. Procédé selon la revendication 1, **caractérisé en ce que** lors de la vérification (St2.1) une période d'inertie (dt1) est prise en compte, dans lequel une commande des soupapes de commande ABS (4A, 4B) n'est empêchée que lorsqu'après la disparition d'un cas de glissement au freinage ABS (vDiff, aGrenz) sur au moins une des roues (2A, 2B) et qu'après l'expiration de la période d'inertie (dt1) une activation d'une soupape de commande ABS (4A, 4B) quelconque est demandée.

3. Procédé selon l'une quelconque des revendications 1 à 2, **caractérisé en ce qu'**une commande de la soupape de commande ABS (4A) est empêchée lorsqu'une activation d'une soupape de commande ABS (4A, 4B) quelconque sur une roue (2A) du véhicule (200) est demandée et qu'une autre soupape de commande ABS (4B) ne met pas correctement en œuvre sur au moins une autre roue (2B) du véhicule (200) une commande (SB) à régulation du glissement au freinage.

4. Procédé selon l'une quelconque des revendications précédentes, **caractérisé en ce que** l'une des roues (2A) est disposée sur un premier essieu (1A), de préférence un essieu avant (1A) du véhicule (200), et l'autre roue (2B) sur un deuxième essieu (2B), de préférence un essieu arrière (1B) du véhicule (200), de sorte qu'une vérification relative à l'essieu a lieu.

5. Procédé selon l'une quelconque des revendications précédentes, **caractérisé en ce qu'**il est surveillé s'il résulte des signaux d'entrée (SRA, SRB, SDiag, SAnf) qu'une activation d'une soupape de commande ABS (4A, 4B) quelconque associée à une roue (2A, 2B) du véhicule (200) est demandée, et s'il résulte des grandeurs de régulation (vA, vB, aA, aB) qu'un cas de glissement au freinage ABS (vDiff, aGrenz) est présent sur la roue (2A, 2B) du véhicule (200) associée à la soupape de commande ABS (4A, 4B) commandée.

6. Système de freinage (100a, 100b) pouvant être commandé électroniquement, adapté à la mise en œuvre du procédé selon l'une quelconque des revendications précédentes, présentant au moins :
des soupapes de commande ABS (4A, 4B) pour le freinage à régulation du glissement au freinage des roues (2A, 2B) d'un essieu de véhicule (1A, 1B),
un dispositif de commande ABS (110) pour la commande de la régulation ABS,
un dispositif de surveillance (120) pour la mise en œuvre de la vérification (St2), dans lequel le dispositif de surveillance (120) est réalisé
pour lire des signaux d'entrée (SRA, SRB, SDiag, SAnf), dans lequel des grandeurs de régulation (vA, vB, aA, aB) actuellement présentes pour la régulation ABS ainsi que des paramètres de commande ABS (SAnf, SDiag), qui concernent une commande à régulation du glissement au freinage (SA, SB) d'une soupape de commande ABS (4A, 4B) du système de freinage (100a, 100b), peuvent être déduits des signaux d'entrée (SRA, SRB, SDiag, SAnf), et
pour générer et pour émettre un signal de désactivation (SDeak) en fonction de la vérification (St2).

7. Système de freinage (100a, 100b) pouvant être commandé électroniquement selon la revendication 6, **caractérisé en ce que** dans le dispositif de surveillance (120) des signaux internes (SAkt, SNach, SSchalt, SAchs, SErr), en fonction desquels la vérification (St2) peut être mise en œuvre, peuvent être déterminés à partir des signaux d'entrée (SRA, SRB, SDiag, SAnf), dans lequel
un signal d'activation (SAkt) indique si un cas de glissement au freinage ABS (vDiff, aGrenz) est présent sur au moins une roue (2A, 2B) du véhicule (200),
un signal d'inertie (SNach) prend en compte une période d'inertie (dt1) après la disparition d'un cas de glissement au freinage ABS (vDiff, aGrenz) sur au moins une roue (2A, 2B) du véhicule (200),
un signal de commutation (SSchalt) indique une commande (SA, SB) pour l'activation d'une soupape de commande ABS (4A, 4B) quelconque du véhicule (200),
un signal d'essieu (SAchs) indique une commande (SA, SB) relative à l'essieu pour l'activation des soupapes de commande ABS (4A, 4B), et
un signal d'erreur (SErr) indique de manière relative à l'essieu si une commande (SA, SB) à régulation du glissement au freinage peut être mise en œuvre sans défaut par une soupape de commande ABS (4A, 4B).

8. Système de freinage (100a, 100b) pouvant être commandé électroniquement selon la revendication 6 ou 7, **caractérisé en ce que** le système de freinage est un système de freinage hydraulique (100b) ou un système de freinage pneumatique (100a).

9. Véhicule (200), en particulier véhicule utilitaire (200), avec un système de freinage (100a, 100b) à commande électronique selon l'une quelconque des revendications 6 à 8.
